# EUROPEAN PATENT SPECIFICATION

(11) **EP 4 551 083 B1**
(45) Date of publication and mention of the grant of the patent: **09.09.2026**
(21) Application number: 22741756.5
(22) Date of filing: 05.07.2022
(51) Int. Cl.: G05D 1/242, G05D 1/246, G05D 1/648, G06V 20/10, A47L 11/40

(54) **ROBOTIC CLEANING DEVICE USING OPTICAL SENSOR FOR NAVIGATION**
ROBOTISCHE REINIGUNGSVORRICHTUNG MIT OPTISCHEM SENSOR ZUR NAVIGATION
DISPOSITIF DE NETTOYAGE ROBOTIQUE FAISANT APPEL À UN CAPTEUR OPTIQUE POUR LA NAVIGATION

(43) Date of publication of application: 14.05.2025
(73) Proprietor: AKTIEBOLAGET ELECTROLUX, 105 45 Stockholm (SE)
(72) Inventor: FORSBERG, Petter, 105 45 Stockholm (SE); LINDHÉ, Magnus, 105 45 Stockholm (SE); KÅNGE, Fredrik, 105 45 Stockholm (SE)
(74) Representative: Electrolux Group Patents
(86) International application number: PCT/EP2022/068610
(87) International publication number: WO 2024/008279

(56) References cited:
- US-A1- 2016 144 511
- US-A1- 2017 344 019
- US-B1- 11 348 269

## Description

### TECHNICAL FIELD

The present disclosure relates to a method of a robotic cleaning device of navigating over a surface to be cleaned, and a robotic cleaning device performing the method.

### BACKGROUND

In many fields of technology, it is desirable to use robots with an autonomous behaviour such that they freely can move around a space without colliding with possible obstacles.

Robotic vacuum cleaners are known in the art, which are equipped with drive means in the form of a motor for moving the cleaner across a surface to be cleaned. The robotic vacuum cleaners are further equipped with intelligence in the form of microprocessor(s) and navigation means for causing an autonomous behaviour such that the robotic vacuum cleaners freely can move around and clean a surface in the form of e.g. a floor. Thus, these prior art robotic vacuum cleaners have the capability of more or less autonomously vacuum clean a room in which objects such as tables and chairs and other obstacles such as walls and stairs are located.

In order to navigate the surface to be cleaned, prior art robotic vacuum cleaners commonly use a camera for capturing images of the surroundings, from which images a 2D or 3D representation of the surroundings is created. Further, such robotic vacuum cleaner typically use wheel encoders along with gyroscope data for determining position and heading of the robotic vacuum cleaner with respect to a reference position. The wheel encoders determine distance travelled by the robot by counting wheel rotations, and the robot navigates the surface using the determined distance. This is known as dead-reckoning.

A problem with these prior art robotic vacuum cleaners is that they are sensitive to wheel slip. When travelling over a surface such as a glossy parquet floor or a rug, the wheels of the robot occasionally slip, and as a consequence the wheel encoders will not correctly determine the travelled distance resulting in erroneous navigation.

US 2017/0344019 A1 discloses a robotic cleaning device and a method for operating the robotic cleaning device to detect a structure of a surface over which the robotic cleaning device moves. The method includes illuminating the surface with structured vertical light, capturing an image of the surface, detecting at least one luminous section in the captured image, and determining, from an appearance of the at least one luminous section, the structure of the surface.

### SUMMARY

One objective is to solve, or at least mitigate, this problem in the art and thus to provide an improved method of a robotic cleaning device of navigating over a surface to be cleaned.

This objective is attained in a first aspect by a robotic cleaning device configured to navigate over a surface to be cleaned, comprising a propulsion system configured to move the robotic cleaning device over the surface to be cleaned, a camera configured to capture images of surroundings of the robotic cleaning device, at least one light source configured to illuminate objects in front of the camera, and an optical odometry sensor arranged to be directed towards the surface and configured to measure position of the robotic cleaning device. The robotic cleaning device further comprises a heading sensor configured to measure heading of the robotic cleaning device and a controller configured to detect a luminous section in each captured image caused by the at least one light source illuminating an object, said luminous section representing detected object data, determine location of the detected object data in each captured image with respect to a reference position using the measured position and heading of the robotic cleaning device, create a 3D representation of the illuminated object by aggregating the detected object data of captured images taking into account the determined location of the detected object data for the captured images, the created 3D representation being utilized by the robotic cleaning device for navigating the surface to be cleaned.

This objective is attained in a second aspect by a method of a robotic cleaning device of navigating a surface to be cleaned. The method comprises illuminating objects in front of a camera of the robotic cleaning device, capturing images of surroundings of the robotic cleaning device, measuring position of the robotic cleaning device as the robotic cleaning device moves over the surface using an optical odometry sensor arranged to be directed towards said surface and heading of the robotic cleaning device using a heading sensor, detecting a luminous section in each captured image caused by the illumination of an object, said luminous section representing detected object data, determining location of the detected object data in each captured image with respect to a reference position using the measured position and heading of the robotic cleaning device, and creating a 3D representation of the illuminated object by aggregating the detected object data of captured images taking into account the determined location of the detected object data for the captured images, the created 3D representation being utilized by the robotic cleaning device for navigating the surface to be cleaned.

Advantageously, by using an optical sensor to determine position of the robotic cleaning device when creating the 3D representation enabling the robotic cleaning device to navigate the surface to be cleaned, the robotic cleaning device will not be affected by wheel slip.

Hence, even if the robotic device travels over a surface which causes the robotic device wheels to slip, the optical sensor directed towards the surface will correctly measure the position (and possibly heading) of the robotic device with respect to a selected reference point.

In an embodiment, the at least one light source comprises a first and second line laser configured to illuminate objects in front of the camera.

In an embodiment, the first and second line lasers are vertically oriented line lasers.

In an embodiment, the at least one light source further comprises a horizontally oriented line laser.

In an embodiment, the first and second line lasers are symmetrically arranged on opposite sides of the camera.

In an embodiment, the robotic cleaning device further comprises an inertial measurement unit configured to measure the heading of the robotic cleaning device.

In an embodiment, the robotic cleaning device further comprises an odometry encoder arranged on each drive wheel of the propulsion system for measuring the position and heading of the robotic cleaning device.

In an embodiment, the heading sensor is one of the optical odometry sensor, the inertial measurement unit, the odometry encoder or a combination thereof.

In an embodiment, the optical sensor is arranged in a recess on an underside of a main body of the robotic cleaning device to protect the optical sensor from being impacted by any objects.

In an embodiment, the optical sensor is arranged behind an opening of a main body of the robotic cleaning device such that debris and dust are removed from the surface towards which the optical sensor is directed.

In a third aspect, a computer program comprising computer-executable instructions is provided for causing the robotic cleaning device of the first aspect to perform the steps of the method of the second aspect when the computer-executable instructions are executed on a controller included in the robotic cleaning device.

In a fourth aspect, a computer program product comprising a computer readable medium is provided, the computer readable medium having the computer program according to the third aspect embodied thereon.

### BRIEF DESCRIPTION OF THE DRAWINGS

Aspects and embodiments are now described, by way of example, with reference to the accompanying drawings, in which:
Figure 1 shows a prior art robotic cleaning device in a bottom view, in which embodiments may be implemented;
Figure 2 shows the robotic cleaning device of Figure 1 in a front view;
Figures 3a-3c illustrate the robotic cleaning device of Figures 1 and 2 moving around a surface to be cleaned in order to create a 3D representation of the surroundings;
Figure 4 illustrates incorrect robot navigation due to wheel slip;
Figure 5 shows a robotic cleaning device according to an embodiment in a bottom view; and
Figure 6 shoes a flowchart illustrating a method of a robotic cleaning device of navigating over a surface to be cleaned according to an embodiment.

### DETAILED DESCRIPTION

Embodiments relate to robotic cleaning devices, or in other words, to automatic, self-propelled machines for cleaning a surface, e.g. a robotic vacuum cleaner, a robotic sweeper or a robotic floor washer. The robotic cleaning device according to the invention can be mains-operated and have a cord, be battery-operated or use any other kind of suitable energy source, for example solar energy.

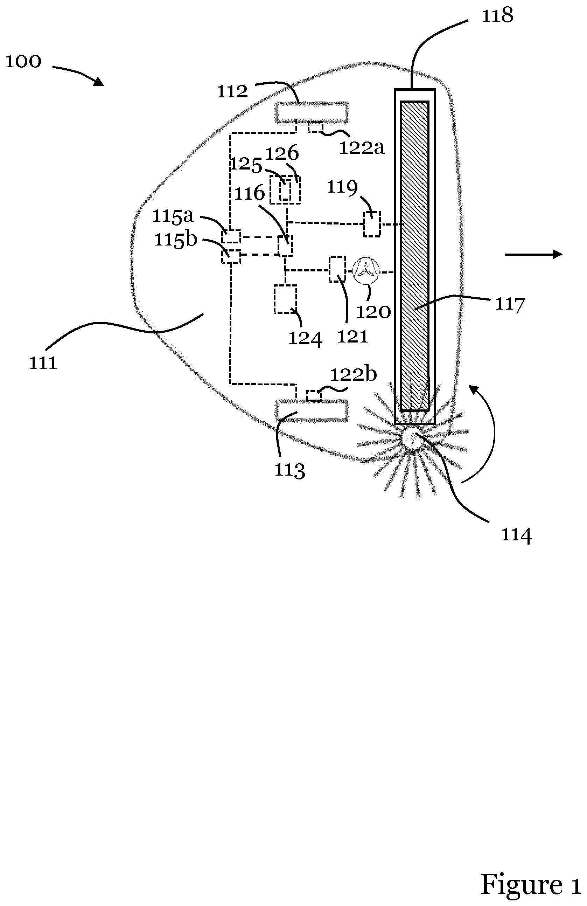

Even though it is envisaged that the invention may be performed by a variety of appropriate robotic cleaning devices being equipped with sufficient processing intelligence, Figure 1 shows a prior art robotic cleaning device 100 in a bottom view, i.e. the underside side of the robotic cleaning device is shown, in which embodiments may be implemented. The arrow indicates the forward direction of the robotic cleaning device 100 being illustrated in the form of a robotic vacuum cleaner.

The robotic cleaning device 100 comprises a main body 111 housing components such as a propulsion system comprising driving means in the form of two electric wheel motors 115a, 115b for enabling movement of the driving wheels 112, 113 such that the cleaning device can be moved over a surface to be cleaned. Each wheel motor 115a, 115b is capable of controlling the respective driving wheel 112, 113 to rotate independently of each other in order to move the robotic cleaning device 100 across the surface to be cleaned. A number of different driving wheel arrangements, as well as various wheel motor arrangements, can be envisaged. It should be noted that the robotic cleaning device may have any appropriate shape, such as a device having a more traditional circular-shaped main body, or a triangular-shaped main body. As an alternative, a track propulsion system may be used or even a hovercraft propulsion system. The propulsion system may further be arranged to cause the robotic cleaning device 100 to perform any one or more of a yaw or pitch translation or roll movement.

A controller 116 such as a microprocessor controls the wheel motors 115a, 115b to rotate the driving wheels 112, 113 as required in view of information received from an obstacle detecting device (not shown in Figure 1) for detecting obstacles in the form of walls, floor lamps, table legs, around which the robotic cleaning device must navigate. The obstacle detecting device may be embodied in the form of a 3D sensor system registering its surroundings, implemented by means of e.g. a 3D camera, a camera in combination with lasers, a laser scanner, laser projector or light emitting diode (LED) illuminator, etc. for detecting obstacles and communicating information about any detected obstacle to the microprocessor 116. The microprocessor 116 communicates with the wheel motors 115a, 115b to control movement of the wheels 112, 113 in accordance with information provided by the obstacle detecting device such that the robotic cleaning device 100 can move as desired across the surface to be cleaned.

Further, the main body 111 may optionally be arranged with a cleaning member 117 for removing debris and dust from the surface to be cleaned in the form of a rotatable brush roll arranged in an opening 118 at the bottom of the robotic cleaner 100. Thus, the rotatable brush roll 117 is arranged along a horizontal axis in the opening 118 to enhance the dust and debris collecting properties of the robotic cleaning device 100. In order to rotate the brush roll 117, a brush roll motor 119 is operatively coupled to the brush roll to control its rotation in line with instructions received from the controller 116.

Moreover, the main body 111 of the robotic cleaner 100 comprises a suction fan 120 creating an air flow for transporting debris to a dust bag or cyclone arrangement (not shown) housed in the main body via the opening 118 in the bottom side of the main body 111. The suction fan 120 is driven by a fan motor 121 communicatively connected to the controller 116 from which the fan motor 121 receives instructions for controlling the suction fan 120. It should be noted that a robotic cleaning device having either one of the rotatable brush roll 117 and the suction fan 20 for transporting debris to the dust bag can be envisaged. A combination of the two will however enhance the debris-removing capabilities of the robotic cleaning device 100.

The main body 111 of the robotic cleaning device 100 may further be equipped with an inertia measurement unit (IMU) 124, such as e.g. a gyroscope and/or an accelerometer and/or a magnetometer or any other appropriate device for measuring displacement of the robotic cleaning device 100 with respect to a reference position, in the form of e.g. orientation, rotational velocity, gravitational forces, etc. A three-axis gyroscope is capable of measuring rotational velocity in a roll, pitch and yaw movement of the robotic cleaning device 100. A three-axis accelerometer is capable of measuring acceleration in all directions, which is mainly used to determine whether the robotic cleaning device is bumped or lifted or if it is stuck (i.e. not moving even though the wheels are turning). The robotic cleaning device 100 further comprises encoders 122a, 122b on each drive wheel 112, 113 which generate pulses when the wheels turn. The encoders may for instance be magnetic or optical. By counting the pulses at the controller 116, the speed of each wheel 112, 113 can be determined. From wheel speed readings, the controller 116 can perform so called dead reckoning to determine position and heading of the cleaning device 100. This can further be improved by also taking into account gyroscope information in addition to the wheel speed readings.

The main body 111 may further be arranged with a rotating side brush 114 adjacent to the opening 118, the rotation of which could be controlled by the drive motors 115a, 115b, the brush roll motor 119, or alternatively a separate side brush motor (not shown). Advantageously, the rotating side brush 114 sweeps debris and dust such from the surface to be cleaned such that the debris ends up under the main body 111 at the opening 118 and thus can be transported to a dust chamber of the robotic cleaning device. Further advantageous is that the reach of the robotic cleaning device 100 will be improved, and e.g. corners and areas where a floor meets a wall are much more effectively cleaned. As is illustrated in Figure 1, the rotating side brush 114 rotates in a direction such that it sweeps debris towards the opening 118 such that the suction fan 120 can transport the debris to a dust chamber. The robotic cleaning device 100 may comprise two rotating side brushes arranged laterally on each side of, and adjacent to, the opening 118.

With further reference to Figure 1, the controller/processing unit 116 embodied in the form of one or more microprocessors is arranged to execute a computer program 125 downloaded to a suitable storage medium 126 associated with the microprocessor, such as a Random Access Memory (RAM), a Flash memory or a hard disk drive. The controller 116 is arranged to carry out a method according to embodiments of the present invention when the appropriate computer program 125 comprising computer-executable instructions is downloaded to the storage medium 126 and executed by the controller 116. The storage medium 126 may also be a computer program product comprising the computer program 125. Alternatively, the computer program 125 may be transferred to the storage medium 126 by means of a suitable computer program product, such as a digital versatile disc (DVD), compact disc (CD) or a memory stick. As a further alternative, the computer program 125 may be downloaded to the storage medium 126 over a wired or wireless network. The controller 116 may alternatively be embodied in the form of a digital signal processor (DSP), an application specific integrated circuit (ASIC), a field-programmable gate array (FPGA), a complex programmable logic device (CPLD), etc.

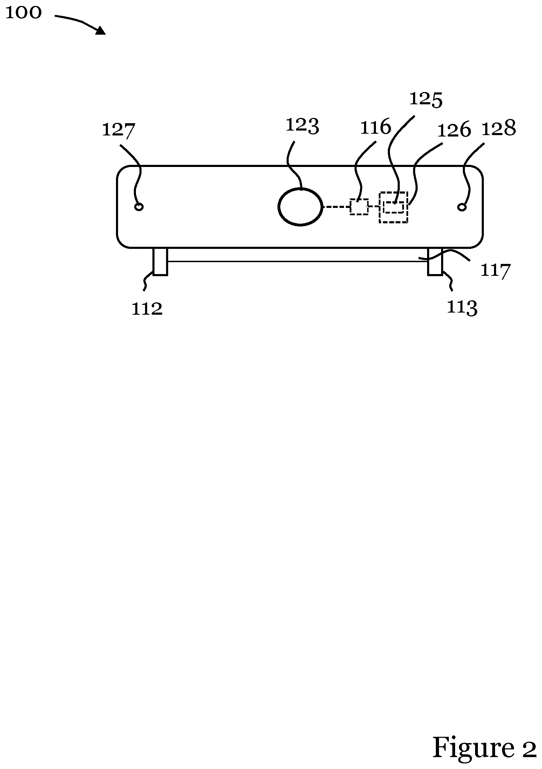

Figure 2 shows a front view of the robotic cleaning device 100 of Figure 1 illustrating the previously mentioned obstacle detecting device in the form of a 3D sensor system comprising at least a camera 123 and a first and a second line laser 127, 128, which may be horizontally or vertically oriented line lasers. Further shown is the controller 116, the main body 111, the driving wheels 112, 113, and the rotatable brush roll 117 previously discussed with reference to Figure 1. The controller 116 is operatively coupled to the camera 123 for recording images of a vicinity of the robotic cleaning device 100. The first and second line lasers 127, 128 may preferably be vertical line lasers and are arranged lateral of the camera 123 and configured to illuminate a height and a width that is greater than the height and width of the robotic cleaning device 100. Further, the angle of the field of view of the camera 123 is preferably greater than the space illuminated by the first and second line lasers 127, 128. The camera 123 is controlled by the controller 116 to capture and record a plurality of images per second. Data from the images is extracted by the controller 116 and the data is typically saved in the memory 126 along with the computer program 125.

The first and second line lasers 127, 128 are typically arranged on a respective side of the camera 123 along an axis being perpendicular to an optical axis of the camera. Further, the line lasers 127, 128 are directed such that their respective laser beams intersect within the field of view of the camera 123. Typically, the intersection coincides with the optical axis of the camera 123.

The first and second line laser 127, 128 are configured to scan, preferably in a vertical orientation, the vicinity of the robotic cleaning device 100, normally in the direction of movement of the robotic cleaning device 100. The first and second line lasers 127, 128 are configured to emit laser beams, which illuminate furniture, walls and other objects of e.g. a room to be cleaned. The camera 123 is controlled by the controller 116 to capture and record images from which the controller 116 creates a representation or layout of the surroundings that the robotic cleaning device 100 is operating in, by extracting features from the images and by measuring the distance covered by the robotic cleaning device 100, while the robotic cleaning device 100 is moving across the surface to be cleaned. Thus, the controller 116 derives positional data of the robotic cleaning device 100 with respect to the surface to be cleaned from the wheel encoders 122a, 122b and the IMU 124, generates a 3D representation of the surroundings from the derived positional data which is associated with the extracted features and controls the driving motors 115a, 115b to move the robotic cleaning device across the surface to be cleaned in accordance with the generated 3D representation and navigation information supplied to the robotic cleaning device 100 such that the surface to be cleaned can be navigated by taking into account the generated 3D representation. Since the derived positional data will serve as a foundation for the navigation of the robotic cleaning device, it is important that the positioning is correct; the robotic device will otherwise navigate according to a "map" of its surroundings that is misleading.

The 3D representation generated from the images recorded by the 3D sensor system thus facilitates detection of obstacles in the form of walls, floor lamps, table legs, around which the robotic cleaning device must navigate as well as rugs, carpets, doorsteps, etc., that the robotic cleaning device 100 must traverse. The robotic cleaning device 100 is hence configured to learn about its environment or surroundings by moving around the surface to be cleaned.

Hence, the 3D sensor system comprising the camera 123 and the first and second vertical line lasers 127, 128 is arranged to record images of the surroundings of the robotic cleaning from which objects/obstacles may be detected. The controller 116 is capable of positioning the detected obstacles in relation to a reference position on the surface to be cleaned to create the 3D representation. From the positioning, the controller 116 controls movement of the robotic cleaning device 100 by means of controlling the wheels 112, 113 via the wheel drive motors 115a, 115b, across the surface to be cleaned, thereby enabling navigation.

As is understood, a single line laser may be used. However, by using dual line lasers 127, 128, a larger amount of data is obtained from which the 3D representation of the surroundings is created (typically, twice as much data is obtained using dual lasers).

The derived position of any detected objects with respect to a reference position facilitates control of the movement of the robotic cleaning device 100 such that cleaning device can be navigated to move very close to an object, and to move closely around the object to remove debris from the surface on which the object is located. Hence, the derived positional data is utilized to move flush against the object, being e.g. a chair, a table, a sofa, a thick rug or a wall. Typically, the controller 116 continuously generates and transfers control signals to the drive wheels 112, 113 via the drive motors 115a, 115b such that the robotic cleaning device 100 is navigated close to the object.

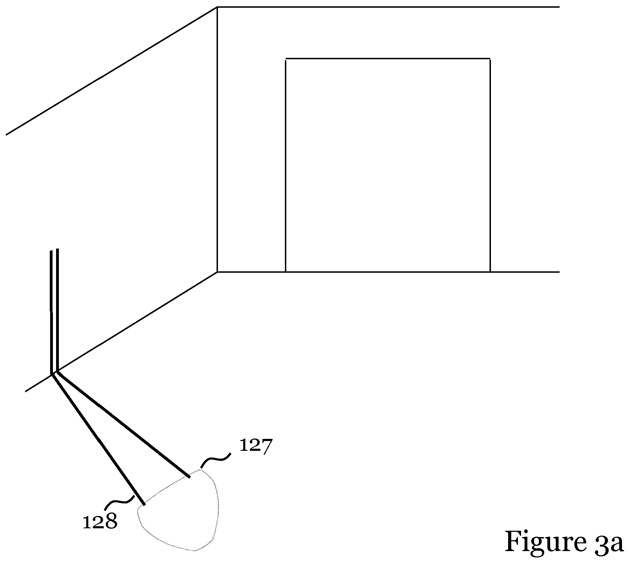

Figure 3a illustrates detection of objects on a surface over which the robotic cleaning device moves.

Thus, the robotic device 100 travels over the surface to be cleaned while recording images from which a 3D representation is created for navigation of the device.

In this particular exemplifying embodiment, the robotic device 100 uses two vertical line lasers 127, 128 for illuminating the surface over which it moves. As can be seen in Figure 3a, each of the line lasers 127, 128 projects a laser beam onto the floor and a first wall of a room to be cleaned, while the robotic device 100 uses its camera 123 to capture images of the illuminated surface.

As can be seen, the laser beams will fall onto the floor and the wall resulting in two parallel lines in the captured image. From the captured image, the robotic device 100 detects that the laser beams illuminates an obstacle, in this case a wall. The robotic device 100 is capable of determining a distance to the wall from the captured image. Thus, the robotic cleaning device 100 determines position of the obstacle with respect to a reference position of a navigation coordinate system.

By moving across the surface and using data recorded by the encoders 122a, 122b to determine distance being travelled and data from the IMU 124 for determining heading, the robotic cleaning device 100 computes the position of detected object data - i.e. data represented by luminous sections in each captured image corresponding to the line lasers impinging on the wall - with respect to the reference position of the navigation coordinate system. As is understood, this reference position may constitute any appropriately selected position in the room. The navigation coordinate system may be fixed in relation to the robotic cleaning device 100 itself or in relation to the surroundings using e.g. a reference position somewhere on the floor.

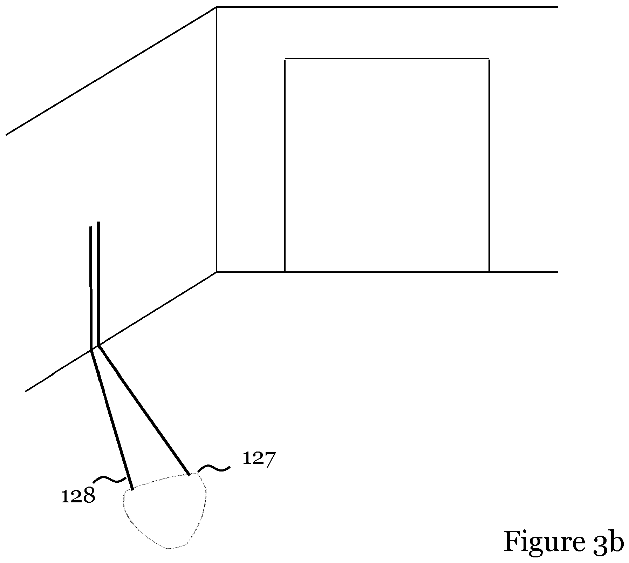

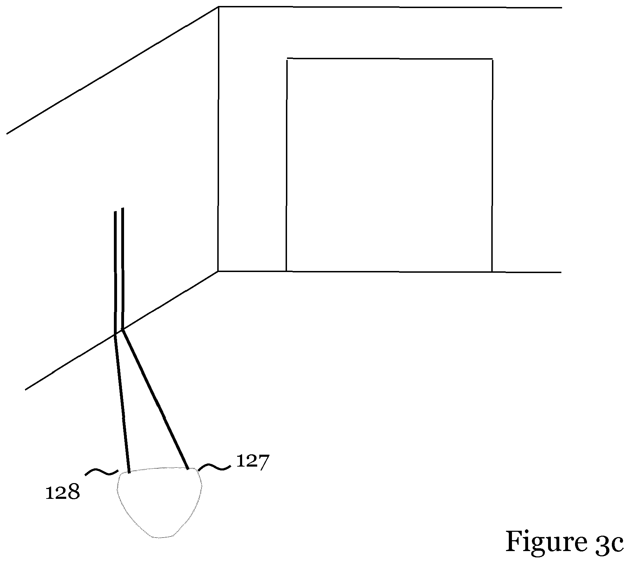

Figure 3b illustrates the robotic cleaning device 100 rotating slightly in a right-hand direction and capturing a second image (the laser beams moving correspondingly with the rotation), while Figure 3c illustrates the robotic cleaning device 100 further rotating to the right and capturing a third image.

By capturing a number of images and aggregating the detected object data of each image, the robotic device 100 is capable of creating a 3D representation which reproduces the particular obstacle with high reliability.

As described, for each image being captured as illustrated throughout Figures 3a-3c, the robotic device 100 must keep track of its movement and heading with respect to the reference position of the navigation coordinate system, since the 3D representation of the surroundings will be created by combining the detected object data of each captured image and thus correctly position the detected object in the navigation coordinate system.

Hence, it is important that the distance between the detected object data in each image is correctly computed using the previously described dead-reckoning approach.

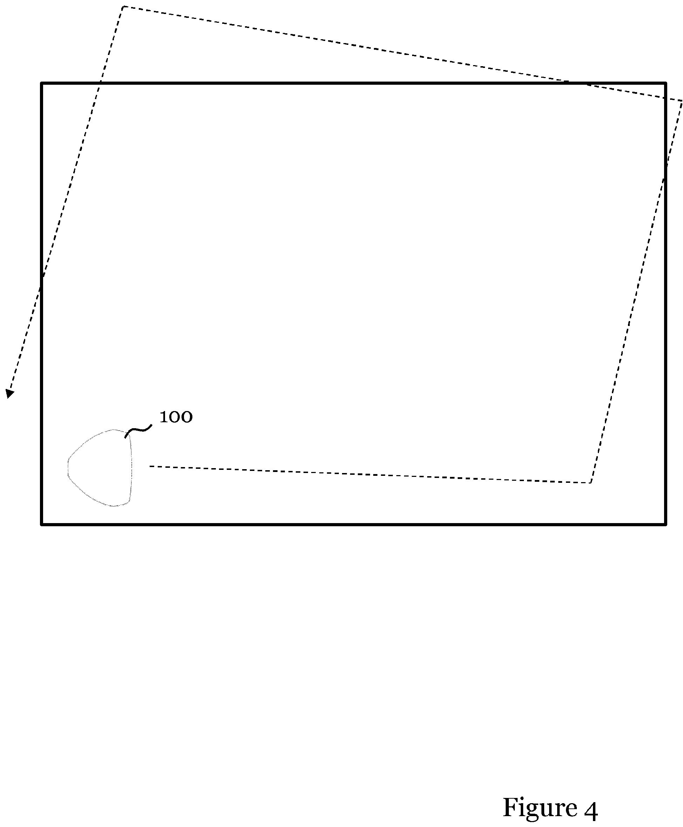

However, with reference to the illustration of Figure 4, a problem with the use of wheel encoders 122a, 122b for determining the movement of the robotic cleaning device 100 is that in case wheel slip occurs - e.g. if the robotic device 100 travels over a high-gloss floor or a rug carpet - the computed movement will become incorrect (the travelled distance will be estimated to be greater than what it actually is).

As a consequence, an incorrect 3D representation will ultimately be created since the aggregation of detected object data taking into account movement and heading of the robotic device 100 in relation to the reference position will be performed by utilizing erroneous movement data as recorded by wheel encoders 122a, 122b.

In Figure 4, the continuous lines illustrate the actual room boundary, while the dotted lines illustrate the incorrect perception of the room of the robotic device 100 upon performing dead-reckoning based on incorrectly computed distances due to wheel slip.

Now, even if the 3D representation would be corrected, wheel slip occurring during navigation using the corrected 3D representation would result in incorrectly computed distances and the robot would not navigate correctly with respect to the 3D representation. Further, the 3D representation is updated repeatedly, e.g. since furniture such as a chair may be added to the room, which chair also should be added to the 3D representation by capturing further images and detecting new obstacles from the images to be added to the 3D representation. Hence, wheel slip will result in an incorrectly updated 3D representation.

A commonly used approach is to use lidar ("light detection and ranging"), also known as 2D scanning, where distance measurements are collected 360° around the robot several times per second thereby obtaining reliable distance data for robust navigation as well as overlapping images for forming a 3D representation.

A drawback using lidar is that only obstacles at a height of a lidar sensor turret is registered. It collects a rotating disc of distance data originating from the sensor which usually protrudes about 10 mm from an upper side of the robot. As a consequence, no data is registered above and, more importantly, below the lidar disc. To detect obstacles, the robot must be equipped with additional sensors covering the gap between the floor and the lidar sensor.

It would alternatively be possible to use known 3D sensors utilizing time-of-flight measurements of an image being completely illuminated. With such a time-of-flight 3D sensor, the distance in a captured image would be determined for each pixel and distances to detected object data may thus be determined even if wheel slip occurs. However, in addition to being expensive, a far greater amount of data must be processed which adds to the processing burden of the processing unit 116. Typically, the robotic device 100 would have to be equipped with a far more powerful processor in case a time-of-flight 3D sensor is utilized.

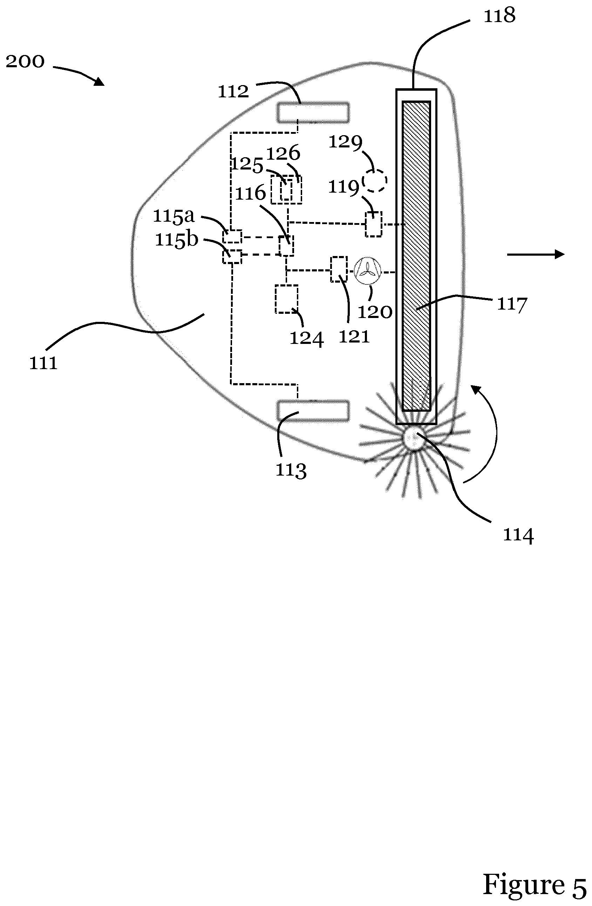

With reference to Figure 5, in order to resolve the issue of wheel slip resulting in the wheel encoders 122a, 122b registering incorrect movement of the robotic cleaning device 100, a robotic cleaning device 200 is provided which in an embodiment is equipped with an optical sensor 129 arranged on the underside of the robotic device 200 and directed towards the floor in order to measure movement and heading of the robotic device 200.

In an embodiment, the optical sensor 129 is arranged in a recess on an underside of the main body 111 of the robotic cleaning device 200 to protect the optical sensor 129 from being impacted by any objects.

In an embodiment, the optical sensor 129 is arranged behind the opening 118 of the main body 111 of the robotic cleaning device 200 such that debris and dust are removed from the surface towards which the sensor 129 is directed.

As is understood, such robotic device 200 does not require the wheel encoders 122a, 122b of the robotic device 100 of Figure 1, but may optionally use an IMU 124 for more reliable heading measurement. Nevertheless, the robotic cleaning device 200 may comprise wheel encoders 122a, 122b in addition to the optical sensor 129. Further, the robotic cleaning device 200 of this embodiment uses the camera and line laser setup illustrated in Figure 2.

Figure 5 illustrates the robotic cleaning device 200 being equipped with such an optical odometry sensor 129 pointing towards the floor. The optical sensor 129 is typically in communicative connection with the processing unit 116 in order for the processing unit 116 to receive movement and heading data recorded by the optical sensor 129 in order to determine the position of the robotic device 200 with respect to the reference position of the navigation coordinate system (and thus the location of any detected object data extracted from the captured images for creating the 3D representation).

In an example, the optical sensor 129 comprises a camera capturing images of the surface over which the robotic device 200 travels and determines the movement and heading of the robotic device 200. The function of the optical sensor 129 is similar to that of a computer mouse; i.e. it is able to detect features of the surface in captured images and determine how the features have moved in relation to a previously captured image.

Hence, in case of wheel slip, the optical sensor 129 will record the actual movement of the robotic device 200 over the floor rather than the movement of the wheels as in the case of the robotic device 100 of Figure 1.

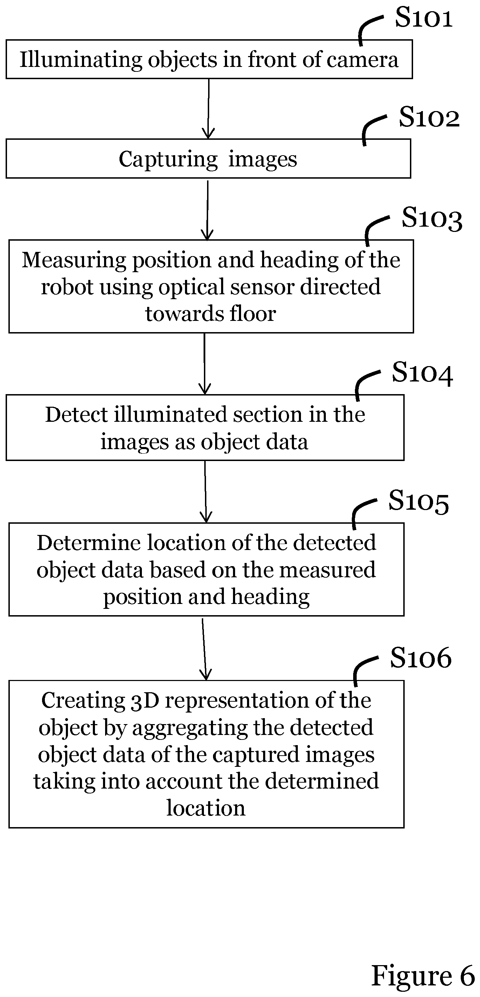

Figure 6 shows a flowchart illustrating a method of the robotic cleaning device 200 of navigating a surface to be cleaned according to an embodiment. Reference will further be made again to Figures 3a-3c where the robotic cleaning device 200 navigates a surface to be cleaned.

Thus, the robotic device 200 travels over the surface to be cleaned while recording images from which a 3D representation is created for navigation of the device 200.

In this particular exemplifying embodiment, the robotic device 100 uses two vertical line lasers 127, 128 for illuminating the surface over which it moves in step S101. As can be seen in Figure 3a, each of the line lasers 127, 128 projects a laser beam onto the floor and a first wall of a room to be cleaned, while the robotic device 100 uses its camera 123 to capture images of the illuminated surface in step S102.

In an embodiment, in addition to utilizing the two vertical line lasers 127, 128, the robotic device 200 is equipped with a horizontal line laser (not shown). Advantageously, such a third horizontal line lase would act as a lidar.

As the robotic device 200 moves over the surface to be cleaned, the optical sensor 129 directed towards the surface measures movement and possibly heading of the robotic device 200 in step S103. Thus, the optical sensor 129, the IMU 124 or even the wheel encoders 122a, 122b (or a combination thereof) may be utilized for measuring the heading of the robotic cleaning device 200. In the following example, the optical sensor 129 is used both for measuring position and heading.

As previously described with reference to Figure 3a, the laser beams will fall onto the floor and the wall resulting in two luminous sections in the form of parallel lines occurring in the captured image, which lines are detected by the controller 116 as object data in step S104.

Further, in step S105, the location of the detected object data in each captured image is determined with respect to a reference position of the surroundings based on the measured movement and heading of the robotic cleaning device200.

Thus, using the measured movement and heading data of the optical sensor 129, the controller 116 is capable of computing the location of the detected object data of each captured image in relation to a reference point in the room.

In Figure 3a, a first image is captured with the robotic device 200 being in a first position and having a first heading in relation to the reference point, while in Figure 3b a second image is captured with the robotic device 200 being in a second position and having a second heading in relation to the reference point.

In other words, the location of the detected object data of each captured image is determined by the controller 116 based on the position and heading of the robotic device 200 as measured by the optical sensor 129, the IMU 124 or the wheel encoders 122a, 122b.

The detected object data of the second image is thus aggregated to the detected object data of the first image by taking into account the determined location of the two sets of detected object data, thereby allowing the controller 116 to create a 3D representation of a detected object (in this case the wall) and ultimately its surroundings.

Similarly, in Figure 3c a third image is captured with the robotic device 200 being in a third position and having a third heading in relation to the reference point. The detected object data of the third image is then aggregated to the previously detected object data taking into account its determined location, thereby advantageously further building the 3D representation in view of which the robotic device 200 performs its navigation across the surface to be cleaned.

Advantageously, by using the optical sensor 129, the creation of the 3D representation enabling the robotic cleaning device 200 to navigate the surface to be cleaned will not be affected by wheel slip.

Hence, even if the robotic device 200 travels over a surface which causes the wheels 112, 113 to slip, the optical sensor 129 directed towards the surface will correctly measure the position and heading of the robotic device 200 with respect to a selected reference point.

In a further embodiment, the robotic device 200 uses the IMU 124 or the wheel encoders 122a, 122b to measure current heading and may use the heading data measured by the IMU 124 or the wheel encoders 122a, 122b to determine location of any detected object data in relation to the selected reference position rather than using the heading data measured by the optical sensor 129.

## Claims

1. A robotic cleaning device (200) configured to navigate over a surface to be cleaned, comprising:
a propulsion system (112, 113, 115a, 115b) configured to move the robotic cleaning device (200) over the surface to be cleaned;
a camera (123) configured to capture images of surroundings of the robotic cleaning device (200);
at least one light source (127) configured to illuminate objects in front of the camera (123);
an optical odometry sensor (129) arranged to be directed towards the surface and configured to measure position of the robotic cleaning device (200);
a heading sensor (122a, 122b, 124, 129) configured to measure heading of the robotic cleaning device (200); and
a controller (116) configured to:
detect a luminous section in each captured image caused by the at least one light source (127) illuminating an object, said luminous section representing detected object data;
determine location of the detected object data in each captured image with respect to a reference position using the measured position and heading of the robotic cleaning device (200); and being characterized to:
create a 3D representation of the illuminated object by aggregating the detected object data of captured images taking into account the determined location of the detected object data for the captured images, the created 3D representation being utilized by the robotic cleaning device (200) for navigating the surface to be cleaned.

2. The robotic cleaning device (200) of claim 1, the at least one light source comprising:
a first and second line laser (127, 128) configured to illuminate objects in front of the camera (123).

3. The robotic cleaning device (200) of any one of claims 1 or 2, the first and second line laser (127, 128) being symmetrically arranged on opposite sides of the camera (123).

4. The robotic cleaning device (200) of any one of the preceding claims, further comprising:
an inertial measurement unit (124) configured to measure the heading of the robotic cleaning device (200).

5. The robotic cleaning device (200) of any one of the preceding claims, further comprising:
an odometry encoder (122a, 122b) arranged on each drive wheel (112, 113) of the propulsion system for measuring the position and heading of the robotic cleaning device (200).

6. The robotic cleaning device (200) of claims 4 and 5, the heading sensor (122a, 122b, 124, 129) being one of the optical odometry sensor (129), the inertial measurement unit (124), the odometry encoder (122a, 122b) or a combination thereof.

7. The robotic cleaning device (200) of any one of the preceding claims, the optical odometry sensor (129) being arranged in a recess on an underside of a main body (111) of the robotic cleaning device (200).

8. The robotic cleaning device (200) of any one of the preceding claims, the optical odometry sensor (129) being arranged behind an opening (118) of a main body (111) of the robotic cleaning device (200), via which opening (118) dust and debris is collected.

9. A method of a robotic cleaning device (200) of navigating a surface to be cleaned, comprising:
illuminating (S101) objects in front of a camera (123) of the robotic cleaning device (200);
capturing (S102) images of surroundings of the robotic cleaning device (200);
measuring (S103) position of the robotic cleaning device (200) as the robotic cleaning device (200) moves over the surface using an optical odometry sensor (129) arranged to be directed towards said surface and heading of the robotic cleaning device (200) using a heading sensor (122a, 122b, 124, 129);
detecting (S104) a luminous section in each captured image caused by the illumination of an object, said luminous section representing detected object data;
determining (S105) location of the detected object data in each captured image with respect to a reference position using the measured position and heading of the robotic cleaning device (200); and being **characterized in** comprising:
creating (S106) a 3D representation of the illuminated object by aggregating the detected object data of captured images taking into account the determined location of the detected object data for the captured images, the created 3D representation being utilized by the robotic cleaning device (100) for navigating the surface to be cleaned.

10. The method of claim 9, the robotic cleaning device (200) comprising a first and second line laser (127, 128) configured to illuminate objects in front of the camera (123).

11. The method of any one of claims 9 or 10, the first and second line laser (127, 128) being symmetrically arranged on opposite sides of the camera (123).

12. The method of any one of claims 9-11, the robotic cleaning device (200) comprising an inertial measurement unit (124) configured to measure the heading of the robotic cleaning device (200).

13. The method of any one of claims 9-12, the robotic cleaning device (200) comprising an odometry encoder (122a, 122b) arranged on each drive wheel (112, 113) of the propulsion system for measuring the position and heading of the robotic cleaning device (200).

14. The method of any one of claims 12 and 13, the heading sensor (122a, 122b, 124, 129) being one of the optical odometry sensor (129), the inertial measurement unit (124), the odometry encoder (122a, 122b) or a combination thereof.

15. The method of any one of claims 9-14, the optical odometry sensor (129) being arranged in a recess on an underside of a main body (111) of the robotic cleaning device (200).

16. The method of any one of claims 9-15, the optical odometry sensor (129) being arranged behind an opening (118) of a main body (111) of the robotic cleaning device (200), via which opening (118) dust and debris is collected.

17. A computer program (125) comprising computer-executable instructions for causing a robotic cleaning device (200) to perform the steps recited in any one of claims 9-16 when the computer-executable instructions are executed on a controller (116) included in the robotic cleaning device (200).

18. A computer program product comprising a computer readable medium (126), the computer readable medium having the computer program (125) according to claim 17 embodied thereon.

## Patentansprüche

1. Roboterreinigungsvorrichtung (200), die zum Navigieren über eine zu reinigende Fläche konfiguriert ist, umfassend:
ein Antriebssystem (112, 113, 115a, 115b), das konfiguriert ist, die Roboterreinigungsvorrichtung (200) über die zu reinigende Fläche zu bewegen;
eine Kamera (123), die konfiguriert ist, Bilder der Umgebung der Roboterreinigungsvorrichtung (200) aufzuzeichnen;
mindestens eine Lichtquelle (127), die konfiguriert ist, Objekte vor der Kamera (123) zu beleuchten;
einen optischen Odometriesensor (129), der so angeordnet ist, dass er auf die Oberfläche gerichtet ist, und konfiguriert ist, die Position der Roboterreinigungsvorrichtung (200) zu erfassen;
einen Steuerkurssensor (122a, 122b, 124, 129), der konfiguriert ist, den Steuerkurs der Roboterreinigungsvorrichtung (200) zu erfassen; und
eine Steuereinheit (116), die für Folgendes konfiguriert ist:
Erkennen eines erhellten Abschnitts in jedem erfassten Bild, der durch mindestens eine Lichtquelle (127) verursacht wird, die ein Objekt beleuchtet, wobei der erhellte Abschnitt Daten eines erfassten Objekts repräsentiert;
Bestimmen der Position der Daten des erfassten Objekts in jedem erfassten Bild bezogen auf eine Referenzposition anhand der gemessenen Position und des Steuerkurses der Roboterreinigungsvorrichtung (200); und **gekennzeichnet durch**:
Erstellen einer 3D-Darstellung des beleuchteten Objekts, indem die Daten des erfassten Objekts der aufgenommenen Bilder unter Berücksichtigung der bestimmten Position der Daten des erfassten Objekts für die aufgenommenen Bilder aggregiert werden, wobei die erzeugte 3D-Darstellung von der Roboterreinigungsvorrichtung (200) zur Navigation auf der zu reinigenden Oberfläche verwendet wird.

2. Roboterreinigungsvorrichtung (200) nach Anspruch 1, wobei die mindestens eine Lichtquelle umfasst:
einen ersten und einen zweiten Linienlaser (127, 128), die konfiguriert sind, Objekte vor der Kamera (123) zu beleuchten.

3. Roboterreinigungsvorrichtung (200) nach einem der Ansprüche 1 oder 2, wobei der erste und der zweite Linienlaser (127, 128) symmetrisch auf gegenüberliegenden Seiten der Kamera (123) angeordnet sind.

4. Roboterreinigungsvorrichtung (200) nach einem der vorhergehenden Ansprüche, ferner umfassend:
eine Trägheitsmesseinheit (124), die konfiguriert ist, den Steuerkurs der Roboterreinigungsvorrichtung (200) zu erfassen.

5. Roboterreinigungsvorrichtung (200) nach einem der vorhergehenden Ansprüche, ferner umfassend:
einen Odometriecodierer (122a, 122b), der auf jedem Antriebsrad (112, 113) des Antriebssystems angeordnet ist, um die Position und den Steuerkurs der Roboterreinigungsvorrichtung (200) zu erfassen.

6. Roboterreinigungsvorrichtung (200) nach Anspruch 4 und 5, wobei der Steuerkurssensor (122a, 122b, 124, 129) der optische Odometriesensor (129), die Trägheitsmesseinheit (124), der Odometriecodierer (122a, 122b) oder eine Kombination davon ist.

7. Roboterreinigungsvorrichtung (200) nach einem der vorhergehenden Ansprüche, wobei der optische Odometriesensor (129) in einer Aussparung an einer Unterseite eines Hauptkörpers (111) der Roboterreinigungsvorrichtung (200) angeordnet ist.

8. Roboterreinigungsvorrichtung (200) nach einem der vorhergehenden Ansprüche, wobei der optische Odometriesensor (129) hinter einer Öffnung (118) eines Hauptkörpers (111) der Roboterreinigungsvorrichtung (200) angeordnet ist, über die in der Öffnung (118) Staub und Schmutz gesammelt werden.

9. Verfahren einer Roboterreinigungsvorrichtung (200) zum Navigieren über eine zu reinigende Fläche, umfassend:
Beleuchten (S101) von Objekten vor einer Kamera (123) der Roboterreinigungsvorrichtung (200);
Aufnehmen (S102) von Bildern der Umgebung der Roboterreinigungsvorrichtung (200);
Erfassen (S103) der Position der Roboterreinigungsvorrichtung (200), während sich die Roboterreinigungsvorrichtung (200) über die Fläche bewegt, wobei ein optischer Odometriesensor (129) so angeordnet ist, dass er auf die Fläche gerichtet ist, und Führen der Roboterreinigungsvorrichtung (200) unter Verwendung eines Steuerkurssensors (122a, 122b, 124, 129);
Erkennen (S104) eines erhellten Abschnitts in jedem erfassten Bild, der durch die Beleuchtung eines Objekts verursacht wird, wobei der erhellte Abschnitt Daten eines erfassten Objekts repräsentiert;
Bestimmen (S105) der Position der Daten des erfassten Objekts in jedem erfassten Bild bezogen auf eine Referenzposition anhand der gemessenen Position und des Steuerkurses der Roboterreinigungsvorrichtung (200); und **dadurch gekennzeichnet, dass** es umfasst:
Erstellen (S106) einer 3D-Darstellung des beleuchteten Objekts, indem die Daten des erfassten Objekts der aufgenommenen Bilder unter Berücksichtigung der bestimmten Position der Daten des erfassten Objekts für die aufgenommenen Bilder aggregiert werden, wobei die erzeugte 3D-Darstellung von der Roboterreinigungsvorrichtung (100) zur Navigation auf der zu reinigenden Oberfläche verwendet wird.

10. Verfahren nach Anspruch 9, wobei die Roboterreinigungsvorrichtung (200) einen ersten und einen zweiten Linienlaser (127, 128) umfasst, die konfiguriert sind, Objekte vor der Kamera (123) zu beleuchten.

11. Verfahren nach einem der Ansprüche 9 oder 10, wobei der erste und der zweite Linienlaser (127, 128) symmetrisch auf gegenüberliegenden Seiten der Kamera (123) angeordnet sind.

12. Verfahren nach einem der Ansprüche 9-11, wobei die Roboterreinigungsvorrichtung (200) eine Trägheitsmesseinheit (124) umfasst, die konfiguriert ist, um den Steuerkurs der Roboterreinigungsvorrichtung (200) zu erfassen.

13. Verfahren nach einem der Ansprüche 9-12, wobei die Roboterreinigungsvorrichtung (200) einen Odometriecodierer (122a, 122b) umfasst, der auf jedem Antriebsrad (112, 113) des Antriebssystems angeordnet ist, um die Position und den Steuerkurs der Roboterreinigungsvorrichtung (200) zu erfassen.

14. Verfahren nach einem der Ansprüche 12 und 13, wobei der Steuerkurssensor (122a, 122b, 124, 129) der optische Odometriesensor (129), die Trägheitsmesseinheit (124), der Odometriecodierer (122a, 122b) oder eine Kombination davon ist.

15. Verfahren nach einem der Ansprüche 9-14, wobei der optische Odometriesensor (129) in einer Aussparung an einer Unterseite eines Hauptkörpers (111) der Roboterreinigungsvorrichtung (200) angeordnet ist.

16. Verfahren nach einem der Ansprüche 9-15, wobei der optische Odometriesensor (129) hinter einer Öffnung (118) eines Hauptkörpers (111) der Roboterreinigungsvorrichtung (200) angeordnet ist, über die in der Öffnung (118) Staub und Schmutz gesammelt werden.

17. Computerprogramm (125), das computerausführbare Anweisungen zum Bewirken, dass eine Roboterreinigungsvorrichtung (200) die Schritte nach einem der Ansprüche 9-16 durchführt, wenn die computerausführbaren Anweisungen auf einer Steuereinheit (116) ausgeführt werden, die in der Roboterreinigungsvorrichtung (200) enthalten ist, umfasst.

18. Computerprogrammprodukt, das ein computerlesbares Medium (126) umfasst, wobei auf dem computerlesbaren Medium das Computerprogramm (125) nach Anspruch 17 enthalten ist.

## Revendications

1. Dispositif de nettoyage robotisé (200) configuré pour naviguer sur une surface à nettoyer, comprenant :
un système de propulsion (112, 113, 115a, 115b) configuré pour déplacer le dispositif de nettoyage robotisé (200) sur la surface à nettoyer ;
une caméra (123) configurée pour capturer des images de l'environnement du dispositif de nettoyage robotisé (200) ;
au moins une source lumineuse (127) configurée pour éclairer des objets devant la caméra (123) ;
un capteur odométrique optique (129) disposé pour être dirigé vers la surface et configuré pour mesurer la position du dispositif de nettoyage robotisé (200) ;
un capteur de cap (122a, 122b, 124, 129) configuré pour mesurer le cap du dispositif de nettoyage robotisé (200) ; et
un contrôleur (116) programmé pour :
détecter une section lumineuse dans chaque image capturée provoquée par l'au moins une source lumineuse (127) éclairant un objet, ladite section lumineuse représentant des données de l'objet détecté ;
déterminer l'emplacement des données de l'objet détecté dans chaque image capturée par rapport à une position de référence en utilisant la position et le cap mesurés du dispositif de nettoyage robotisé (200) ; et **caractérisé en ce qu'**il :
créer une représentation 3D de l'objet éclairé par agrégation des données de l'objet détecté des images capturées en tenant compte de l'emplacement déterminé des données de l'objet détecté pour les images capturées, la représentation 3D créée étant utilisée par le dispositif de nettoyage robotique (200) pour naviguer sur la surface à nettoyer.

2. Dispositif de nettoyage robotisé (200) selon la revendication 1, l'au moins une source de lumière comprenant :
un premier et un second laser linéaire (127, 128) configurés pour éclairer des objets devant la caméra (123).

3. Dispositif de nettoyage robotisé (200) selon l'une quelconque des revendications 1 ou 2, les premier et second lasers linéaires (127, 128) étant agencés symétriquement sur des côtés opposés de la caméra (123).

4. Dispositif de nettoyage robotisé (200) selon l'une quelconque des revendications précédentes, comprenant en outre :
une unité de mesure inertielle (124) configurée pour mesurer le cap du dispositif de nettoyage robotisé (200).

5. Dispositif de nettoyage robotisé (200) selon l'une quelconque des revendications précédentes, comprenant en outre :
un codeur odométrique (122a, 122b) disposé sur chaque roue motrice (112, 113) du système de propulsion pour mesurer la position et le cap du dispositif de nettoyage robotisé (200).

6. Dispositif de nettoyage robotisé (200) selon les revendications 4 et 5, le capteur de cap (122a, 122b, 124, 129) étant l'un du capteur odométrique optique (129), de l'unité de mesure inertielle (124), du codeur odométrique (122a, 122b) ou une combinaison de ceux-ci.

7. Dispositif de nettoyage robotisé (200) selon l'une quelconque des revendications précédentes, le capteur odométrique optique (129) étant agencé dans un évidement sur une face inférieure d'un corps principal (111) du dispositif de nettoyage robotisé (200).

8. Dispositif de nettoyage robotisé (200) selon l'une quelconque des revendications précédentes, le capteur odométrique optique (129) étant agencé derrière une ouverture (118) d'un corps principal (111) du dispositif de nettoyage robotisé (200), ouverture (118) par l'intermédiaire de laquelle la poussière et les débris sont collectés.

9. Procédé de navigation d'un dispositif de nettoyage robotisé (200) sur une surface à nettoyer, comprenant :
l'éclairage (S101) d'objets devant une caméra (123) du dispositif de nettoyage robotisé (200) ;
la capture (S102) d'images de l'environnement du dispositif de nettoyage robotisé (200) ;
la mesure (S103) de la position du dispositif de nettoyage robotisé (200) lorsque le dispositif de nettoyage robotisé (200) se déplace sur la surface à l'aide d'un capteur odométrique optique (129) agencé pour être dirigé vers ladite surface et du cap du robot de nettoyage (200) à l'aide d'un capteur de cap (122a, 122b, 124, 129) ;
la détection (S104) d'une section lumineuse dans chaque image capturée provoquée par l'éclairage d'un objet, ladite section lumineuse représentant représentant des données de l'objet détecté ;
la détermination (S105) de l'emplacement des données de l'objet détecté dans chaque image capturée par rapport à une position de référence en utilisant la position et le cap mesurés du dispositif de nettoyage robotisé (200) ;
et **caractérisé en ce qu'**il comprend :
la création (S106) d'une représentation 3D de l'objet éclairé par agrégation des données de l'objet détecté des images capturées en tenant compte de l'emplacement déterminé des données de l'objet détecté pour les images capturées, la représentation 3D créée étant utilisée par le dispositif de nettoyage robotique (100) pour naviguer sur la surface à nettoyer.

10. Procédé selon la revendication 9, le dispositif de nettoyage robotisé (200) comprenant un premier et un second laser linéaire (127, 128) configurés pour éclairer des objets devant la caméra (123).

11. Procédé selon l'une quelconque des revendications 9 ou 10, les premier et second lasers linéaires (127, 128) étant agencés symétriquement sur des côtés opposés de la caméra (123).

12. Procédé selon l'une quelconque des revendications 9 à 11, le dispositif de nettoyage robotisé (200) comprenant une unité de mesure inertielle (124) configurée pour mesurer le cap du dispositif de nettoyage robotisé (200).

13. Procédé selon l'une quelconque des revendications 9 à 12, le dispositif de nettoyage robotisé (200) comprenant un codeur odométrique (122a, 122b) agencé sur chaque roue motrice (112, 113) du système de propulsion pour mesurer la position et le cap du dispositif de nettoyage robotisé (200).

14. Procédé selon l'une quelconque des revendications 12 et 13, le capteur de cap (122a, 122b, 124, 129) étant l'un du capteur odométrique optique (129), de l'unité de mesure inertielle (124), du codeur odométrique (122a, 122b) ou une combinaison de ceux-ci.

15. Procédé selon l'une quelconque des revendications 9 à 14, le capteur odométrique optique (129) étant agencé dans un évidement sur une face inférieure d'un corps principal (111) du dispositif de nettoyage robotisé (200).

16. Procédé selon l'une quelconque des revendications 9 à 15, dans lequel le capteur odométrique optique (129) est agencé derrière une ouverture (118) d'un corps principal (111) du dispositif de nettoyage robotisé (200), ouverture (118) par l'intermédiaire de laquelle la poussière et les débris sont collectés.

17. Programme informatique (125) comprenant des instructions exécutables par ordinateur pour amener un dispositif de nettoyage robotisé (200) à réaliser les étapes énoncées dans l'une quelconque des revendications 9 à 16 lorsque les instructions exécutables par ordinateur sont exécutées sur un contrôleur (116) contenu dans le dispositif de nettoyage robotisé (200).

18. Produit-programme informatique comprenant un support (126) lisible par ordinateur, le programme informatique (125) selon la revendication 17 étant matérialisé sur le support lisible par ordinateur.
